# EUROPÄISCHE PATENTSCHRIFT

(11) **EP 3 735 810 B1**
(45) Veröffentlichungstag und Bekanntmachung des Hinweises auf die Patenterteilung: **20.12.2023**
(21) Anmeldenummer: 20172764.1
(22) Anmeldetag: 04.05.2020
(51) Int. Cl.: A01B 59/042, A01B 59/06, A01B 63/02, A01B 63/12

(54) **KOPPLUNGSVORRICHTUNG FÜR EINEN KRAFTHEBER**
COUPLING DEVICE FOR A POWER LIFT
DISPOSITIF D'ACCOUPLEMENT POUR UN ATTELAGE

(30) Priorität: 07.05.2019 DE 102019003207
(43) Veröffentlichungstag der Anmeldung: 11.11.2020
(73) Patentinhaber: Deere & Company, Moline, IL 61265 (US)
(72) Erfinder: LETSCHER, Jens, 68163 Mannheim (DE); REINMUTH, Florian, 68163 Mannheim (DE)
(74) Vertreter: Dehnhardt, Florian Christopher

(56) Entgegenhaltungen:
- EP-A1- 3 259 970
- EP-A1- 3 453 236
- EP-A2- 2 283 719
- DE-A1- 2 358 081
- DE-A1-102016 117 237

## Beschreibung

Die Erfindung betrifft eine Kopplungsvorrichtung zur Anbindung eines Krafthebers eines Traktors an ein Anbaugerät.

In DE 10 2015 224 757 A1 ist an einem Traktor eine Vorrichtung vorgesehen, um die Höhenlage eines vom Traktor gezogenen Anbaugerätes in Form eines Pflugs zu ermitteln. Bei Abweichung von einer Referenz-Höhenlage wird eine hydraulische Betätigungseinheit aktiviert, um den Pflug zu verschwenken.

EP 3 453 236 offenbart eine Kopplungsvorrichtung bei der die Kopplungseinheiten beweglich gelagert sind.

Der vorliegenden Erfindung liegt die Aufgabe zugrunde, mit einfachen technischen Mitteln einen effizienten Arbeitsbetrieb eines Anbaugerätes zu ermöglichen.

Diese Aufgabe wird durch eine Kopplungsvorrichtung mit den Merkmalen des Patentanspruchs 1 gelöst.

Weitere vorteilhafte Ausgestaltungen der erfindungsgemäßen Kopplungsvorrichtung gehen aus den Unteransprüchen hervor. Gemäß Patentanspruch 1 dient die Kopplungsvorrichtung zur Anbindung eines Krafthebers eines Traktors an ein Anbaugerät. Sie weist einen Lenkermontagebereich und einen Gerätemontagebereich auf. Der Lenkermontagebereich hat Kopplungseinheiten zur Anlenkung eines Oberlenkers und zweier Unterlenker des Krafthebers. Der Gerätemontagebereich dient einer Fixierung des Anbaugerätes. Die Kopplungseinheiten sind an einer Vorrichtungsbasis der Kopplungsvorrichtung beweglich gelagert. Dabei sind den beiden Unterlenkern zugeordnete Kopplungseinheiten entlang einer Querrichtung translationsbeweglich, während eine dem Oberlenker zugeordnete Kopplungseinheit entlang einer lotrecht zur Querrichtung verlaufenden Hochrichtung translationsbeweglich ist.

Die Kopplungsvorrichtung wirkt gewissermaßen als zwischen dem Kraftheber und dem Anbaugerät zwischengeschaltete Montageschnittstelle. Somit können technische Maßnahmen (z.B. hydraulische oder elektrische Antriebseinheiten) für eine Bewegungssteuerung des Oberlenkers und der Unterlenker an der Kopplungsvorrichtung angeordnet werden. Hierdurch kann für eine exakte Bewegungssteuerung des Oberlenkers und der Unterlenker auf entsprechende technische Maßnahmen an der Tragstruktur des Traktors verzichtet werden. Die Kopplungsvorrichtung kann flexibel bei unterschiedlichen Typen von Traktoren bzw. deren Tragstrukturen eingesetzt werden, ohne dass letztere durch technische Maßnahmen aufwändig angepasst werden müssten.

Die Fixierung des jeweiligen Anbaugerätes an dem Gerätemontagebereich der Kopplungsvorrichtung kann mit unterschiedlichen Fixiermitteln erfolgen. Beispielsweise sind an dem Gerätemontagebereich Fanghaken oder andere Befestigungsstellen angeordnet, um mit korrespondierenden Fixierpunkten des Anbaugerätes eine unmittelbare oder mittelbare mechanische Verbindung zu erreichen. Zwischen einzelnen Fixiermitteln der Kopplungsvorrichtung und korrespondierenden Fixierpunkten des Anbaugerätes können auch weitere, z.B. lenkerartige, Verbindungsstücke vorgesehen sein. Unabhängig von der jeweiligen Ausgestaltung der Fixierung des Anbaugerätes an dem Gerätemontagebereich bewirkt die Fixierung insbesondere eine im Wesentlichen starre und lösbare Verbindung zwischen der Kopplungsvorrichtung und dem Anbaugerät.

Die vorgenannte Querrichtung ist vorzugsweise identisch mit einer horizontalen Querrichtung des Traktors, während die vorgenannte Hochrichtung vorzugsweise identisch mit einer vertikalen Hochrichtung des Traktors ist.

Aufgrund der beweglichen Lagerung der Kopplungseinheiten kann die Kopplungsvorrichtung insbesondere zur geometrisch exakten Verstellung der Lage eines Wirkpunktes verwendet werden, welcher unter mindestens folgenden geometrischen Punkten auswählbar ist:
- ein Zugpunkt als geometrischer Schnittpunkt gedachter Verlängerungen beider Unterlenker, und
- ein Polpunkt als geometrischer Schnittpunkt gedachter Verlängerungen des Oberlenkers und eines oder beider Unterlenker.

Durch die vorgenannte Verstellung der Lage des Wirkpunktes kann eine Optimierung des ausgewählten Wirkpunktes für den jeweiligen Arbeitseinsatz des Anbaugerätes erzielt werden. Somit wird der Arbeitsbetrieb des Anbaugerätes mit geringem technischen Aufwand effizienter, sei es durch eine Optimierung seitens des Fahrers bzw. Benutzers oder durch eine automatisierte Optimierung. Dies senkt den Kraftstoffverbrauch des Traktors und spart Arbeitszeit. Gleichzeitig wird eine hohe Arbeitsqualität des Anbaugerätes unterstützt. Außerdem wirkt die Optimierung des ausgewählten Wirkpunktes als eine Assistenzfunktion für den Fahrer bzw. Benutzer, so dass er vor und während des Arbeitsbetriebes erheblich entlastet wird. Insgesamt entsteht eine höhere Produktivität bei niedrigeren Betriebskosten.

Ausgehend von der ermittelten Lage kann eine Verstellung des Wirkpunktes dazu genutzt werden, auf technisch einfache Weise gezielt ein vom Fahrer bzw. Benutzer gewünschtes Arbeitsbetriebsverhalten des Traktors und/oder des Anbaugerätes zu erreichen.

Beispielsweise können während des Arbeitseinsatzes (z.B. Pflügen, sich ändernde Boden- und Topographieeigenschaften wie etwa Hanglage) ein unerwünschtes Gieren und entsprechend notwendige Lenkeingriffe durch den Fahrer vermieden werden, indem die Lage des Zugpunktes optimiert wird. Bei einer anderen Verstellung des Zugpunktes kann beispielsweise auch ein definierter Seitenzug des Anbaugerätes relativ zu einer Furchenwand beim Pflügen realisiert werden.

Mit einer Verstellung des Polpunktes kann eine Traktor-Anbaugerät-Kombination ebenfalls beim Arbeitsbetrieb unterstützt werden, z.B. bei der Bodenbearbeitung, Zugarbeiten oder auch bei einem Zapfwellenantrieb. Beispielsweise kann - abhängig von dem verwendeten Anbaugerät - eine Positionierung des Polpunktes in Fahrtrichtung kurz hinter der Vorderachse des Traktors zu einer passenden Belastung der Vorderachse sowie zu einem ruhigen Tiefenverhalten führen. Die Lage des Polpunktes kann derart verstellt werden, dass das Anbaugerät mit geringem Kraftaufwand komfortabel eingezogen werden kann. Für eine besonders wirksame Rückverfestigung von Führungswalzen verschiedener Anbaugeräte (z.B. Grubber, Scheibenegge) kann der Polpunkt vorzugsweise in Fahrtrichtung vor die Vorderachse des Traktors verstellt werden.

Vorzugsweise ist die Beweglichkeit der den Unterlenkern zugeordneten Kopplungseinheiten derart ausgebildet, dass diese Kopplungseinheiten zur Änderung eines entlang der Querrichtung verlaufenden Relativabstandes zwischen ihnen beweglich sind. Hierbei werden diese beiden Kopplungseinheiten bedarfsweise aufeinander zu oder voneinander weg bewegt. Hierdurch wird insbesondere eine geometrisch möglichst genaue Verstellung des Zugpunktes unterstützt. Zusätzlich kann die Beweglichkeit dieser beiden Kopplungseinheiten auch derart ausgestaltet sein, dass sie gleichzeitig und insbesondere ohne Änderung des Relativabstandes in dieselbe Richtung bewegt werden, so dass die Kopplungsvorrichtung einen seitlichen Versatz zwischen dem Traktor und dem Anbaugerät (z.B. Hacke) erreicht. Dies ist beispielsweise erwünscht, um das Anbaugerät seitlich neben einer Pflanzenreihe fahren zu lassen und um hierdurch etwaige Beschädigungen von Pflanzen zu vermeiden.

In einer bevorzugten Ausführungsform sind die den Unterlenkern zugeordneten Kopplungseinheiten unabhängig voneinander beweglich. Hierdurch sind die Verstellmöglichkeiten des Krafthebers erweitert und ein effizienter Arbeitseinsatz des Anbaugerätes entsprechend unterstützt. Insbesondere ergeben sich für eine Optimierung der Lage des Zugpunktes eine noch größere Anzahl von möglichen Raumpunkten.

In einer weiteren bevorzugten Ausführungsform sind die dem Oberlenker zugeordnete Kopplungseinheit und die den Unterlenkern zugeordneten Kopplungseinheiten unabhängig voneinander beweglich. Hierdurch unterstützt die Kopplungsvorrichtung eine flexible Verstellbarkeit des Krafthebers und somit auch einen effizienten Arbeitsbetrieb des Anbaugerätes.

Erfindungsgemäß weist die Kopplungsvorrichtung mindestens eine Antriebseinheit auf, welche mit mindestens einer Kopplungseinheit verbunden ist. Eine geeignete Ansteuerung (z.B. mittels hydraulischer oder elektrischer Steuersignale) der Antriebseinheit unterstützt eine definierte Translationsbewegung der jeweiligen Kopplungseinheit und somit eine exakte Verstellung des Krafthebers.

Bei einer weiteren bevorzugten Ausführungsform der Kopplungsvorrichtung sind die den beiden Unterlenkern zugeordneten Kopplungseinheiten mit derselben Antriebseinheit verbunden. Hierdurch kann die Bewegungssteuerung für die Unterlenker besonders kostengünstig und raumsparend bereitgestellt werden.

Die vorgenannte Verbindung zwischen einer Antriebseinheit (z.B. hydraulischer Zylinder oder Elektromotor) und einer oder mehrerer Kopplungseinheiten kann abhängig von unterschiedlichen Erfordernissen (z.B. Wirkungsgrad bei der Kraftübertragung, begrenzte Raumverhältnisse, Kosten) unterschiedlich ausgestaltet sein. Vorzugsweise ist die Verbindung zwischen einer Antriebseinheit und der zugeordneten Kopplungseinheit(en) nach Art einer beweglichen Hebelkonstruktion oder einer kinematischen Kette ausgebildet.

Unabhängig von einer spezifischen Ausgestaltung ist die Kopplungsvorrichtung insbesondere Bestandteil einer Steueranordnung zur Bewegungssteuerung eines Krafthebers eines Traktors, insbesondere seines Oberlenkers und seiner Unterlenker.

Die einzelnen Funktionalitäten der Steueranordnung können physisch am Traktor und/oder am Kraftheber und/oder an der Kopplungsvorrichtung und/oder am Anbaugerät verteilt angeordnet sein. Abhängig vom Modell oder Typ des Traktors kann dann die jeweils vorteilhafteste technische Ausgestaltung der Steueranordnung definiert und realisiert werden.

Insbesondere weist die Steueranordnung eine Steuereinheit auf, welche die für eine Signalverarbeitung erforderlichen Teileinheiten wie etwa Lese- und/oder Schreibeinheit, Speichereinheit, Prozessor enthält. Die Steuereinheit kann physisch voneinander getrennte Teileinheiten (z.B. am Traktor und an der Kopplungsvorrichtung) aufweisen oder als ein einziger Block am Traktor angeordnet sein.

Mittels der Steuereinheit kann der Kraftheber technisch einfach bewegungsgesteuert werden, indem die Steuereinheit Verstellsignale generiert. Diese Verstellsignale können für eine Einstellung des Oberlenkers und der Unterlenker des Krafthebers dienen. Insbesondere kann zwischen dem Oberlenker und einem Unterlenker ein Soll-Abstand eingestellt und/oder zwischen zwei Unterlenkern ein Soll-Abstand eingestellt werden.

Für eine technisch einfache Umsetzung der Verstellsignale in eine Bewegungssteuerung des Krafthebers wird mittels der Verstellsignale vorzugsweise mindestens eine Antriebseinheit der Kopplungsvorrichtung angesteuert. Beispielsweise handelt es sich bei der Antriebseinheit um einen Hydraulikzylinder, welcher von einem Steuerventil angesteuert wird. Letzteres wiederum empfängt die vorgenannten Verstellsignale. Die verwendeten Steuerventile sind in einer Ausführungsform an der Kopplungsvorrichtung angeordnet, wodurch am Traktor eine größere Anzahl hydraulischer Steckplätze für andere Zwecke reserviert werden kann. Alternativ werden ohnehin am Traktor vorhandene Steuerventile verwendet, wodurch an der Kopplungsvorrichtung keine Steuerventile berücksichtigt werden müssen und diese entsprechend kostengünstiger und raumsparender ausgestaltet werden kann.

Bei einer anderen bevorzugten Ausführungsform werden die Verstellsignale an einen Elektromotor als Antriebseinheit gesendet.

Um eine technisch effiziente Funktionsweise der Steueranordnung zu unterstützen, ist deren Steuereinheit vorzugsweise derart ausgebildet, dass sie Verstellsignale in Abhängigkeit von einer Soll-Vorgabe oder von einem Vergleich zwischen einer Soll-Vorgabe und einem aktuellen Zustand (z.B. Sensorsignale) generiert. Dabei kann beispielsweise die ermittelte aktuelle Lage eines Wirkpunktes (insbesondere Zugpunkt oder Polpunkt) abhängig von dem Ergebnis eines Vergleichs mit einer Soll-Vorgabe automatisch verstellt werden. Die Soll-Vorgabe ist beispielsweise eine Soll-Lage des ausgewählten Wirkpunktes. Die Soll-Vorgabe wird insbesondere im Rahmen eines Algorithmus mit der aktuellen Lage verglichen. Abhängig von dem Vergleichsergebnis können in der Steuereinheit Verstellsignale generiert werden, welche den Kraftheber bzw. dessen zwei Unterlenker und/oder dessen Oberlenker zu deren Verstellung ansteuern. Diese Verstellung des Krafthebers kann somit eine automatische Umsetzung einer Soll-Vorgabe bewirken.

Die vorgenannte Soll-Vorgabe kann z.B. vom Fahrer bzw. Benutzer des Traktors über eine Benutzerschnittstelle vorgegeben werden. Alternativ kann die Soll-Vorgabe über ein traktorseitiges Steuergerät oder ein Bussystem des Traktors automatisch definiert werden.

Für eine effiziente Optimierungsstrategie bei der Verstellung des Krafthebers bzw. seines Oberlenkers und/oder seiner Unterlenker ist die Funktionalität der Steuereinheit vorzugsweise derart ausgelegt, dass sie zunächst Sensorsignale von einer geeigneten Sensorik empfängt. Aus empfangenen Sensorsignalen kann die Steuereinheit u.a. eine aktuelle Lage des Oberlenkers, der Unterlenker und auch der bereits genannten Wirkpunkte (insbesondere Zugpunkt und/oder Polpunkt) ermitteln. Die aktuelle Lage wird vorzugsweise in Form von Koordinaten x, y, z eines definierten Koordinatensystems ermittelt. In Abhängigkeit von empfangenen Sensorsignalen und ggf. auch von der vorgenannten Soll-Vorgabe kann die Steuereinheit die jeweiligen Verstellsignale für eine optimale Verstellung des Krafthebers generieren.

Die vorgenannte Sensorik ist vorzugsweise Bestandteil der Steueranordnung. Die Sensorik ist derart ausgebildet, dass mittels ihrer Signale aktuelle Werte spezifischer physikalischer Parameter (z.B. Bezugswinkel bezüglich einer Bezugsgeraden, Längen, angreifende Kräfte) einzelner Bestandteile des Krafthebers wie Oberlenker, Unterlenker, Seitenstabilisator gemessen oder ermittelt werden können. Daraus kann u.a. eine aktuelle Lage des Oberlenkers und der Unterlenker und somit auch des Zugpunktes sowie des Polpunktes ermittelt werden.

Die Sensorik kann mehrere und unterschiedliche Sensormittel enthalten, z.B. Inertial- oder Neigungssensor, IMU, optische Sensormittel wie eine oder mehrere Kameraeinheiten. Je nach Anordnung einzelner Bestandteile der Sensorik an dem Traktor und/oder dem Kraftheber und/oder der Kopplungsvorrichtung und/oder dem Anbaugerät kann sie technisch unterschiedlich ausgestaltet sein.

In einer bevorzugten Ausführungsform sind die Sensormittel der Sensorik bereits am Traktor und/oder am Kraftheber vorhanden. In diesem Fall kann die Kopplungsvorrichtung raum- und kostensparend ohne weitere Sensormittel bereitgestellt werden.

In einer alternativen Ausführungsform ist die Sensorik zumindest teilweise, insbesondere vollständig, an der Kopplungsvorrichtung angeordnet. Die Kopplungsvorrichtung kann dann auch bei einer Traktor-Kraftheber-Kombination eingesetzt werden, welche zwar eine Steuereinheit aufweist, jedoch keine geeignete Sensorik zur Ermittlung der aktuellen Lage des Oberlenkers, der Unterlenker und der Wirkpunkte bereitstellen kann.

Die erfindungsgemäße Kopplungsvorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Blockschaltbild mit einer schematisch dargestellten Steueranordnung zur Bewegungssteuerung eines Krafthebers,
- Fig. 2: eine Draufsicht einer schematisch dargestellten Traktor-Anbaugerät-Kombination,
- Fig. 3: eine Seitenansicht der Traktor-Anbaugerät-Kombination gemäß Fig.2,
- Fig. 4: eine Vorderansicht der erfindungsgemäßen Kopplungsvorrichtung mit Blick auf deren Lenkermontagebereich,
- Fig. 5: eine Rückansicht der Kopplungsvorrichtung gemäß Fig. 4 mit Blick auf deren Gerätemontagebereich,
- Fig. 6: eine vergrößerte Teildarstellung etwa des Bereichs VI in Fig. 4 in einer weiteren Ausführungsform,
- Fig. 7: eine vergrößerte Teildarstellung etwa des Bereichs VII in Fig. 4 in einer weiteren Ausführungsform,
- Fig. 8A und Fig. 8B: eine Draufsicht eines Traktors mit zwei unterschiedlichen Lagen des Zugpunktes, und
- Fig. 9A und Fig. 9B: eine Seitenansicht der Tragstruktur eines Traktors mit zwei unterschiedlichen Lagen des Polpunktes.

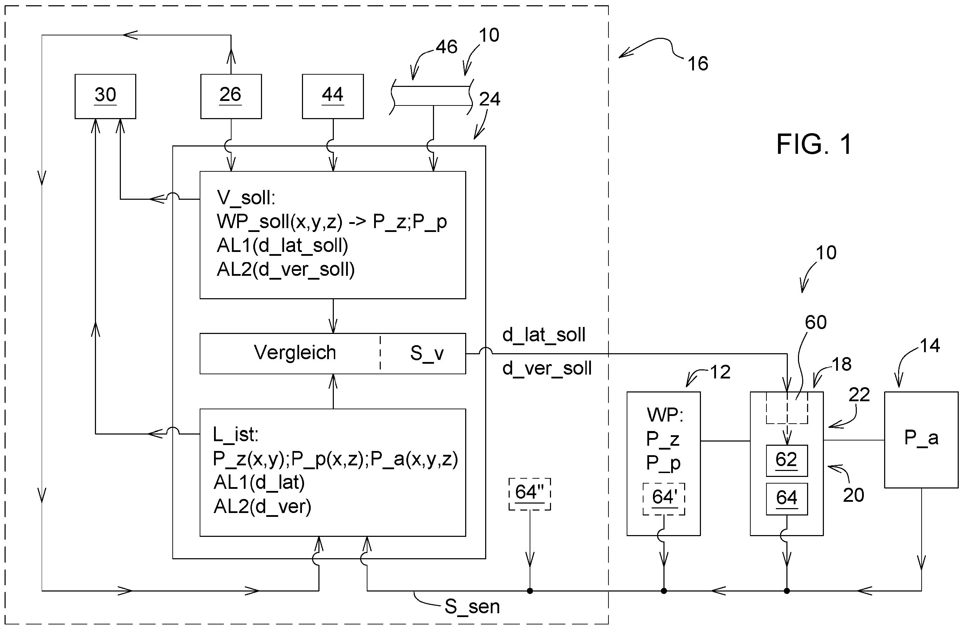

Fig. 1 zeigt eine Steueranordnung 10 mit mehreren Bestandteilen zur Bewegungssteuerung eines Krafthebers 12 und somit auch zur Steuerung des Arbeitsbetriebs eines Anbaugerätes 14. Das Anbaugerät 14 ist über den Kraftheber 12 an einen Traktor 16 gekoppelt. Die Steueranordnung 10 ist bei dem Ausführungsbeispiel gemäß Fig. 1 anteilig an dem Traktor 16 und an einer Kopplungsvorrichtung 18 angeordnet. Die Kopplungsvorrichtung 18 weist einen dem Kraftheber 12 zugewandten Lenkermontagebereich 20 und einen dem Anbaugerät 14 zugewandten Gerätemontagebereich 22 auf.

Die Steueranordnung 10 weist eine Steuereinheit 24 auf, welche die für eine Signalverarbeitung erforderlichen Teileinheiten wie etwa Lese- und/oder Schreibeinheit, Speichereinheit, Prozessor enthält. Die Steuereinheit 24 kann physisch voneinander getrennte Teileinheiten aufweisen oder als ein einziger Block am Traktor 16 angeordnet sein.

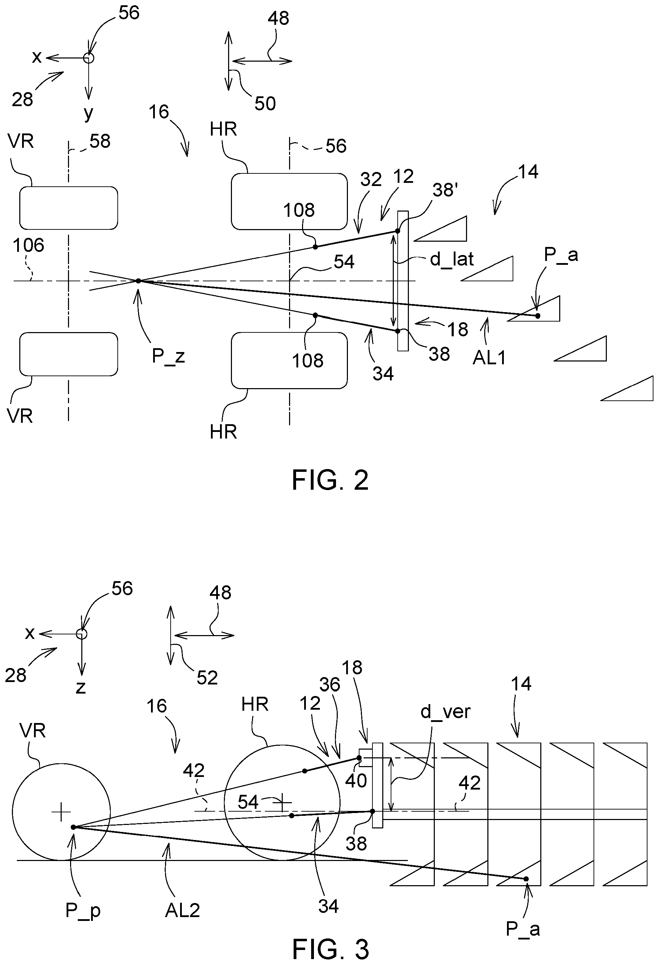

Die Steuereinheit 24 empfängt als Daten beispielsweise Sensorsignale S_sen von dem Kraftheber 12 und/oder der Kopplungsvorrichtung 18 und/oder dem Anbaugerät 14 und/oder Dateninformationen des Fahrers bzw. Nutzers über eine Benutzerschnittstelle 26. Aus den empfangenen Daten ermittelt die Steuereinheit 24 u.a. die aktuelle Lage L_ist zweier noch zu erläuternder Wirkpunkte WP, nämlich eines Zugpunktes P_z und eines Polpunktes P_p. Die aktuelle Lage L_ist wird vorzugsweise in Form von Koordinaten x, y, z eines definierten Koordinatensystems 28 ermittelt (Fig. 2, Fig. 3). Außerdem kann die aktuelle Lage L_ist eines dem Anbaugerät 14 zugeordneten Arbeitspunktes P_a ermittelt werden.

Alternativ kann die aktuelle Lage L_ist des Arbeitspunktes P_a vor oder während des Arbeitseinsatzes des Anbaugerätes 14 ermittelt werden, indem spezifische geometrische Abmessungen des Anbaugerätes 14, spezifische geometrische Abstände zwischen dem Traktor 16 und dem Anbaugerät 14 sowie spezifische Abstände zwischen dem Anbaugerät 14 und dem zu bearbeitenden Erdboden vom Fahrer bzw. Benutzer gemessen und über die Benutzerschnittstelle 26 an die Steuereinheit 24 gesendet werden. Aus den gesendeten Daten kann die Steuereinheit 24 dann die aktuelle Lage L_ist des Arbeitspunktes P_a ermitteln.

Die ermittelte aktuelle Lage L_ist des Wirkpunktes WP, d.h. P_z oder P_p und des Arbeitspunktes P_a kann dem Fahrer über eine Anzeigeeinheit 30 des Traktors 16 signalisiert werden. Zudem kann die ermittelte Lage L_ist des Wirkpunktes WP abhängig von dem Ergebnis eines Vergleichs mit einer Soll-Vorgabe V_soll automatisch verstellt werden. Die Soll-Vorgabe V_soll ist beispielsweise eine Soll-Lage WP_soll des ausgewählten Wirkpunktes WP oder eine Soll-Lage einer Arbeitslinie AL1 (Fig. 2) oder AL2 (Fig. 3). Die Soll-Vorgabe V_soll wird im Rahmen eines Algorithmus mit der aktuellen Lage L_ist verglichen. Abhängig von dem Vergleichsergebnis können in der Steuereinheit 24 Verstellsignale S_v generiert werden. Diese Signale S_v dienen dazu, einen Soll-Abstand d_lat_soll zwischen den beiden Unterlenkern 32, 34 des Krafthebers 12 einzustellen und/oder einen Soll-Abstand d_ver_soll zwischen einem Oberlenker 36 und einem Unterlenker 34 des Krafthebers 12 einzustellen.

Verstellsignale S_v werden von der Steuereinheit 24 beispielsweise dann gesendet, wenn ein aktueller horizontaler Relativabstand d_lat zwischen den beiden dem Anbaugerät 14 zugewandten Kopplungsstellen 38, 38' der Unterlenker 32, 34 durch den Soll-Abstand d_lat_soll ersetzt werden soll. Hierdurch lässt sich eine aktuelle Lage L_ist des Zugpunktes P_z verstellen, so dass der Zugpunkt P_z eine Soll-Lage WP_soll einnehmen kann. Weiterhin werden Verstellsignale S_v von der Steuereinheit 24 gesendet, wenn ein aktueller vertikaler Relativabstand d_ver zwischen der dem Anbaugerät 14 zugewandten Kopplungsstelle 40 des Oberlenkers 36 und einer Bezugsgerade 42 durch den Soll-Abstand d_ver_soll ersetzt werden soll. Hierdurch lässt sich eine aktuelle Lage L_ist des Polpunktes P_p verstellen, so dass der Polpunkt P_p eine Soll-Lage WP_soll einnehmen kann. Die Bezugsgerade 42 verläuft insbesondere durch die Kopplungsstelle 38 bzw. 38' des Unterlenkers 34 bzw. 32.

Wie bereits erläutert, werden abhängig von den Verstellsignalen S_v der Kraftheber 14 bzw. dessen zwei Unterlenker 32, 34 und/oder dessen Oberlenker 36 zu deren Verstellung angesteuert. Diese Verstellung des Krafthebers 12 kann somit eine automatische Umsetzung einer Soll-Vorgabe V_soll bewirken.

Die Soll-Vorgabe V_soll kann z.B. vom Fahrer bzw. Benutzer über die Benutzerschnittstelle 26 vorgegeben werden. Alternativ kann die Soll-Vorgabe V_soll über ein traktorseitiges Steuergerät 44 oder ein Bussystem 46 des Traktors 16 automatisch definiert werden. Die jeweilige Soll-Vorgabe V_soll kann optional an der Anzeigeeinheit 30 signalisiert werden. Der Fahrer oder Benutzer kann dann Soll-Vorgaben komfortabel erkennen und ggf. auch sehr präzise ändern.

Die Darstellung der aktuellen Lagen L_ist und der Soll-Lagen mittels der Soll-Vorgabe V_soll an der Anzeigeeinheit 30 ist vorzugsweise ähnlich der Darstellung in Fig. 2 und Fig. 3, so dass der Benutzer einen guten Überblick über die aktuelle Lage und Veränderungen des ausgewählten Wirkpunktes WP, des Arbeitspunktes P_a sowie der Arbeitslinien AL1 und AL2 hat.

Zur Ermittlung des Wirkpunktes WP, des Arbeitspunktes P_a und der Arbeitslinien AL1, AL2 ist das bereits erwähnte Koordinatensystem 28 definiert, welches anhand von Fig. 2 und Fig. 3 gut erkennbar ist. Das Koordinatensystem 28 weist eine x-Achse, eine y-Achse und eine z-Achse auf. Die x-Achse verläuft parallel zu einer Längsrichtung 48 des Traktors 16, insbesondere einer Fahrzeug-Horizontalen. Die y-Achse verläuft parallel zu einer Querrichtung 50 des Traktors 16, insbesondere einer weiteren Fahrzeug-Horizontalen. Die z-Achse verläuft parallel zu einer Hochrichtung 52 des Traktors 16, insbesondere einer Fahrzeug-Vertikalen. Die drei genannten Achsen schneiden sich in einem Koordinatenursprung 54 bzw. Nullpunkt, der einem Referenzpunkt für die Lage der Wirkpunkte WP, des Arbeitspunktes P_a und der Arbeitslinien AL1, AL2 entspricht. Wie in Fig. 2 und Fig. 3 erkennbar, entspricht dieser Referenzpunkt einem Mittelpunkt einer Hinterachse 56 des Traktors 16.

Weiterhin ist Fig. 2 und Fig. 3 entnehmbar, dass bei dem dort dargestellten Arbeitseinsatz sich die Lage sowohl des Zugpunktes P_z als auch des Polpunktes P_p entlang der Längsrichtung 48 zwischen der Hinterachse 56 mit zwei Hinterrädern HR und einer Vorderachse 58 mit zwei Vorderrädern VR des Traktors 16 befindet. Während die erste Arbeitslinie AL1 den Zugpunkt P_z mit dem Arbeitspunkt P_a verbindet (Fig. 2), verbindet die zweite Arbeitslinie AL2 den Polpunkt P_p mit dem Arbeitspunkt P_a (Fig. 3). Die erste Arbeitslinie AL1 liegt in einer durch die Längsrichtung 48 und die Querrichtung 50 aufgespannten Ebene ein. Die zweite Arbeitslinie AL2 liegt in einer durch die Längsrichtung 48 und die Hochrichtung 52 aufgespannten Ebene ein.

Der Zugpunkt P_z ist der geometrische Schnittpunkt gedachter Verlängerungen der beiden Unterlenker 32, 34 (Fig. 2). Der Polpunkt P_p ist der geometrische Schnittpunkt gedachter Verlängerungen des Oberlenkers 36 und eines Unterlenkers 32 oder 34.

Der horizontale Relativabstand d_lat verläuft parallel zur Querrichtung 50. Der vertikale Relativabstand d_ver verläuft parallel zur Hochrichtung 52.

Ein Teil 60 (z.B. ISO Bus controller) der Steuereinheit 24 kann optional an der Kopplungsvorrichtung 18 integriert sein, was in Fig. 1 schematisch mittels des gestrichelten Blockes 60 dargestellt ist. Unabhängig von der Ausgestaltung der Steuereinheit 24 werden mittels der Verstellsignale S_v eine oder mehrere noch zu erläuternder Antriebseinheiten 62 angesteuert. Mittels der Antriebseinheit(en) 62 werden der Kraftheber 12 bzw. seine Unterlenker 32, 34 und sein Oberlenker 36 bewegungsgesteuert. Verstellsignale S_v können als Steuersignale direkt an die Antriebseinheit 62 (z.B. Elektromotor) gesendet werden. Alternativ können diese Steuersignale an ein Steuerbauteil (z.B. hydraulisches Steuerventil 84) gesendet werden, welches die Antriebseinheit 62 (z.B. Hydraulikzylinder) ansteuert.

Eine die Sensorsignale S_sen an die Steuereinheit 24 ausgebende Sensorik 64 ist ebenfalls an der Kopplungsvorrichtung 18 integriert. Alternativ oder zusätzlich kann zur Erzeugung von Sensorsignalen S_sen an dem Kraftheber 12 und/oder an dem Traktor 16 eine Sensorik 64' bzw. 64'' angeordnet sein.

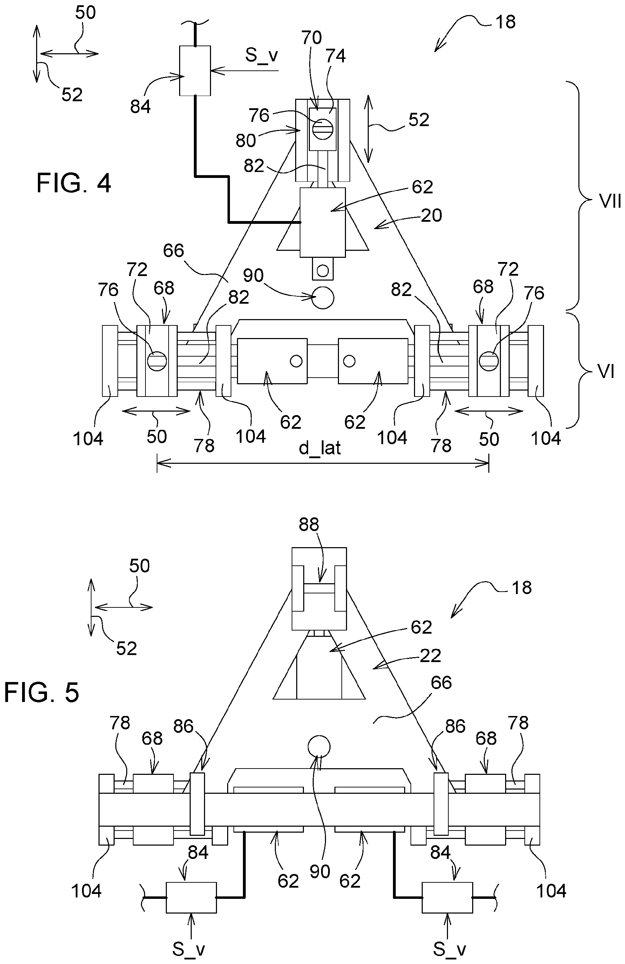

In Fig. 4 und Fig. 5 ist die Kopplungsvorrichtung 18 gut erkennbar. Sie weist eine rahmenartige Vorrichtungsbasis 66 auf, an der verschiedene noch zu erläuternde Bauteile montiert oder gelagert sind.

In Fig. 4 ist die den Lenkermontagebereich 20 aufweisende Seite der Kopplungsvorrichtung 18 sichtbar. An dieser Seite werden der Oberlenker 36 und die beiden Unterlenker 32, 34 angelenkt. Zu diesem Zweck weist der Lenkermontagebereich 20 zwei Kopplungseinheiten 68 für die Unterlenker 32, 34 und eine Kopplungseinheit 70 für den Oberlenker 36 auf. Die Kopplungseinheiten 68, 70 weisen jeweils einen translationsbeweglichen Schieber 72, 74 auf. Jeder Schieber 72, 74 trägt ein Kopplungsgelenk 76, an dem die Kopplungsstelle 38, 38', 40 des jeweiligen Lenkers 32, 34, 36 angelenkt ist. Beispielsweise ist das Kopplungsgelenk 76 kugelgelenkartig ausgebildet und wirkt mit einem Fanghaken als Kopplungsstelle 38, 38', 40 des jeweiligen Lenkers 32, 34, 36 zusammen. Die Schieber 72, 74 sind an Führungsbahnen 78, 80 translationsbeweglich gelagert, welche mit der Vorrichtungsbasis 66 fest verbunden sind. Dabei sind die beiden Schieber 72 und somit auch die Kopplungseinheiten 68 in Querrichtung 50 translationsbeweglich, während der Schieber 74 und somit auch die Kopplungseinheit 70 entlang der lotrecht zur Querrichtung 50 verlaufenden Hochrichtung 52 translationsbeweglich ist.

In Fig. 4 ist jede Kopplungseinheit 68, 70 mit einer separaten Antriebseinheit 62 verbunden. Die Antriebseinheiten 62 sind jeweils als Hydraulikzylinder ausgebildet, deren Kolbenstange 82 mit dem jeweiligen Schieber 72, 74 verbunden ist und ihn hierdurch bewegungsmäßig antreibt. Die hydraulische Antriebseinheit 62 wiederum wird von Verstellsignalen S_v und einem lediglich schematisch dargestellten Steuerventil 84 angesteuert. Die Steuerventile 84 sind vorzugsweise an der Kopplungsvorrichtung 18 oder an dem Traktor 16 angeordnet. Alternativ sind einzelne oder sämtliche Antriebseinheiten 62 nicht-hydraulisch ohne die Steuerventile 84 ausgebildet. Hierbei ist die Antriebseinheit 62 beispielsweise ein Elektromotor mit einem Steuereingang für den Empfang von Verstellsignalen S_v.

Die Antriebseinheiten 62 sind derart ausgelegt, dass die dem Oberlenker 36 zugeordnete Kopplungseinheit 70 einerseits und die den Unterlenkern 32, 34 zugeordneten Kopplungseinheiten 68 andererseits unabhängig voneinander beweglich sind. In Fig. 4 sind außerdem die beiden den Unterlenkern 32, 34 zugeordneten Kopplungseinheiten 68 unabhängig voneinander beweglich.

Während in Fig. 4 die beiden den Unterlenkern 32, 34 zugeordneten Kopplungseinheiten 68 jeweils mit einer Antriebseinheit 62 verbunden sind, sind bei der Ausführungsform gemäß Fig. 5 beide Kopplungseinheiten 68 mit einer einzigen, also derselben Antriebseinheit 62 verbunden. Die beiden Kopplungseinheiten 68 sind dann nicht unabhängig voneinander beweglich. Ungeachtet der Anzahl und/oder Ausgestaltung der den Unterlenkern 32, 34 zugeordneten Kopplungseinheiten 68 bestimmen letztere zwischen sich den in Querrichtung 50 verlaufenden Relativabstand d_lat. Durch entsprechende Translationsbewegungen einer Kopplungseinheit 68 oder beider Kopplungseinheiten 68 wird der Relativabstand d_lat geändert.

In Fig. 5 ist die den Gerätemontagebereich 22 aufweisende Seite der Kopplungsvorrichtung 18 sichtbar. Eine Fixierung des jeweiligen Anbaugerätes 14 an dem Gerätemontagebereich 22 kann mit unterschiedlichen Fixiermitteln erfolgen. Beispielsweise sind an dem Gerätemontagebereich 22 zwei Fanghaken 86 und eine Befestigungsstelle 88 angeordnet, um mit korrespondierenden Fixierpunkten des Anbaugerätes 14 eine unmittelbare oder mittelbare mechanische Verbindung zu erreichen. Zwischen der Befestigungsstelle 88 der Kopplungsvorrichtung 18 und einem korrespondierenden Fixierpunkt des Anbaugerätes 14 kann auch ein weiteres, z.B. lenkerartiges, Verbindungsstück vorgesehen sein. Unabhängig von der jeweiligen Ausgestaltung der Fixierung des Anbaugerätes 14 an dem Gerätemontagebereich 22 bewirkt die Fixierung eine im Wesentlichen starre und lösbare Verbindung zwischen der Kopplungsvorrichtung 18 und dem Anbaugerät 14.

Fig. 4 und Fig. 5 ist entnehmbar, dass die Vorrichtungsbasis 66 von einer kreisrunden Aussparung 90 durchsetzt ist. Diese kann z.B. eine Welle (insbesondere Zapfwelle oder eine entsprechende Verlängerung) zur Kraftübertragung zwischen dem Traktor 16 und dem Anbaugerät 14 aufnehmen.

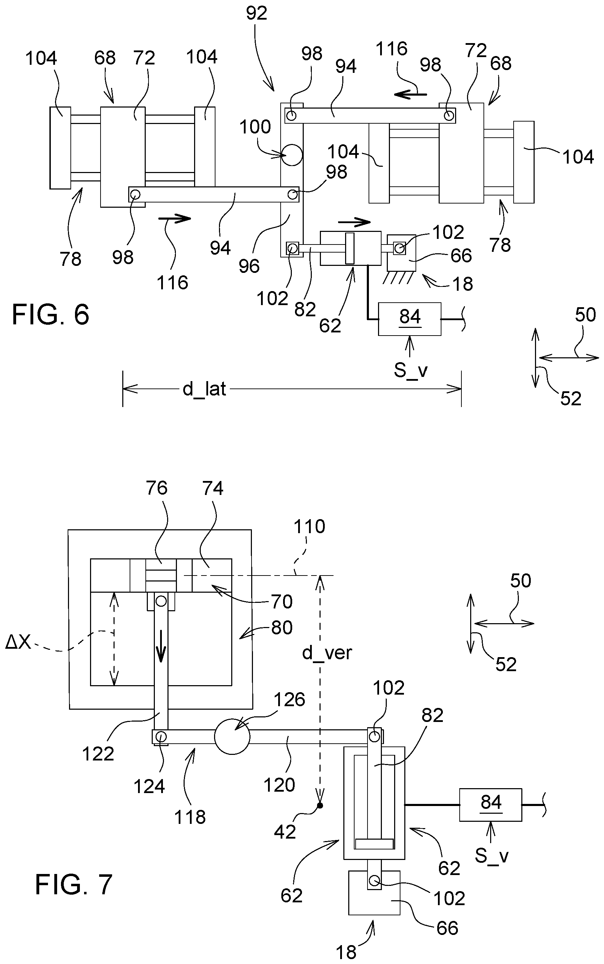

Wie bereits erwähnt, sind in Fig. 6 die beiden Kopplungseinheiten 68 mit einer gemeinsamen Antriebseinheit 62 über eine Hebelkonstruktion 92 verbunden. Die Schieber 72 sind jeweils über einen Verbindungssteg 94 mit einem Verbindungslenker 96, insbesondere mittels entsprechender Gelenkachsen 98, beweglich verbunden. Über eine Lenkerachse 100 ist der Verbindungslenker 96 in hier nicht näher dargestellter Weise an der Kopplungsvorrichtung 18 gelenkig gelagert. Die in Fig. 6 dargestellte Antriebseinheit 62 ist über Gelenkachsen 102 einerseits mit dem Verbindungslenker 96 und andererseits mit der Vorrichtungsbasis 66 beweglich verbunden. Wird die Kolbenstange 82, wie in Fig. 6 angedeutet, in Zeichenblattebene nach rechts angetrieben, werden die beiden Kopplungseinheiten 68 automatisch aufeinander zu bewegt, wie durch die Pfeilrichtungen 116 angedeutet.

In weiteren Ausführungsformen kann die Antriebseinheit 62 gemäß Fig. 6 beispielsweise als ein Elektromotor (z.B. Linearoder Schrittmotor) ausgebildet sein, welcher dann die zumindest bei dieser Ausführungsform mit dem Verbindungslenker 96 fest verbundene Lenkerachse 100 antreibt. In diesem Fall ist die Gelenkachse 102 am Verbindungslenker 96 überflüssig.

Unabhängig von ihrer Ausgestaltung können die den Unterlenkern 32, 34 zugeordneten Antriebseinheiten 62 über die Steuereinheit 24 angesteuert werden, um den Relativabstand d_lat zu ändern. Hierbei ist die Translationsbeweglichkeit der Kopplungseinheiten 68 durch an den Führungsbahnen 78 angeordnete Endanschläge 104 begrenzt.

In der Steuereinheit 24 kann eine Soll-Vorgabe V_soll beispielsweise in Form eines Soll-Wertes d_lat_soll des Relativabstandes d_lat vorgegeben werden, um den Zugpunkt P_z und somit auch die Arbeitslinie AL1 zu verstellen.

Der jeweilige Relativabstand d_lat oder ein physikalischer Parameter (z.B. Streckenänderung) für diesen Relativabstand d_lat wird z.B. als Sensorsignal S_sen an die Steuereinheit 24 gesendet. Hierbei kann ein mit der Lenkerachse 100 zusammenwirkender Drehratensensor für die Sensorsignale S_sen verwendet werden. Die Sensorsignale S_sen können auch eine Information über die aktuelle Lage des Zugpunktes P_z enthalten, da die Lage des Zugpunktes P_z von dem Relativabstand d_lat abhängt.

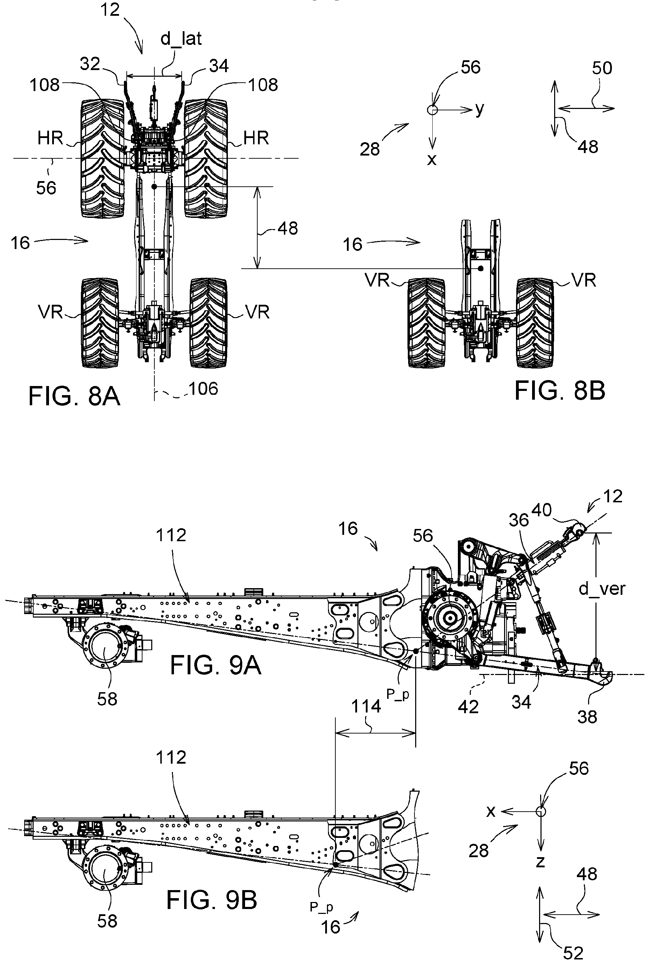

Sofern die verwendete Antriebseinheit 62 und Hebelkonstruktion 92 gemäß Fig. 6 eine spiegelsymmetrische Veränderung der Relativlage beider Unterlenker 32, 34 zulassen, kann der Zugpunkt P_z in einer spezifischen Ausführungsform nur entlang der x-Koordinate bzw. nur entlang der Längsrichtung 48 verstellt werden. Bei symmetrischer Anordnung der Unterlenker 32, 34 bezüglich einer Mittellängsachse 106 des Traktors 16 und konstantem Abstand der beiden dem Traktor 16 zugewandten Kopplungsstellen 108 der Unterlenker 32, 34 zueinander in Querrichtung 50 bedeutet dies, dass der Zugpunkt P_z nur entlang dieser Mittellängsachse 106 in Längsrichtung 48 verstellbar ist. Dabei entspricht die Lage des Zugpunktes P_z in Fig. 8A einem großen, insbesondere maximalen Relativabstand d_lat. Die Lage des Zugpunktes P_z in Fig. 8B entspricht einem kleinen, insbesondere minimalen Relativabstand d_lat.

Im Falle einer unabhängigen Verstellbewegung beider Kopplungseinheiten 68 - z.B. gemäß Fig. 4 - kann der Zugpunkt P_z sowohl hinsichtlich seiner x-Koordinate als auch seiner y-Koordinate verstellt werden.

Wie bereits erläutert, ist die Lage des Polpunktes P_p von der Lage des Oberlenkers 36 relativ zu einem oder beiden Unterlenkern 32, 34 abhängig. Dabei geht es um die Relativlage in einer durch die Längsrichtung 48 und die Hochrichtung 52 aufgespannten Vertikalebene. Diese Relativlage kann durch eine unterschiedliche Position des Oberlenkers 36 bezüglich der parallel zur Längsrichtung 48 verlaufenden horizontalen Bezugsgeraden 42 verändert werden. Hierzu ist die Kopplungsstelle 40 des Oberlenkers 36 an dem Kopplungsgelenk 76 der Kopplungseinheit 70 angelenkt.

Die Steuereinheit 24 kann Verstellsignale S_v generieren, mit denen die Antriebseinheit 62 der Kopplungseinheit 70 ansteuerbar ist. Mit dieser Ansteuerung kann der Schieber 74 entlang der Hochrichtung 52 zwischen der in Fig. 7 dargestellten oberen Position und einer unteren Position innerhalb der Führungsbahn 80 verfahren werden. Hierdurch kann der vertikale Relativabstand d_ver zwischen einer Gelenkachse 110 des Kopplungsgelenkes 76 und der in Fig. 7 nicht maßstabsgetreu angeordneten Bezugsgeraden 42 kontinuierlich und automatisch geändert werden. Der vertikale Relativabstand d_ver ist bei der Position der Kopplungseinheit 70 gemäß Fig. 7 am größten.

In Fig. 7 ist die Kopplungseinheit 70 über eine Hebelkonstruktion 118 mit der Antriebseinheit 62 verbunden. Die Hebelkonstruktion 118 weist eine erste Gelenkstange 120 und eine zweite Gelenkstange 122 auf, welche durch eine Verbindungsachse 124 miteinander gelenkig verbunden sind. Die erste Gelenkstange 120 ist an einer Umlenkachse 126 schwenkbar gelagert. Wird die Kolbenstange 82, wie in Fig. 7 angedeutet, in Zeichenblattebene nach oben angetrieben, bewirkt dies eine Bewegungssteuerung der Kopplungseinheit 70 nach unten und umgekehrt.

Der jeweilige vertikale Relativabstand d_ver oder ein physikalischer Parameter (z.B. Streckenänderung) für diesen Relativabstand d_ver wird z.B. als Sensorsignal S_sen an die Steuereinheit 24 gesendet. Beispielsweise kann eine absolvierte Strecke der Kolbenstange 82 entlang der Hochrichtung 52 sensiert werden. In Fig. 7 ist dieser Parameter als eine maximal mögliche Streckenänderung **Δ**x symbolisiert. Alternativ kann ein mit der Umlenkachse 126 zusammenwirkender Drehratensensor für die Sensorsignale S_sen verwendet werden. Die Sensorsignale S_sen können auch eine Information über die aktuelle Lage des Polpunktes P_p enthalten, da die Lage des Polpunktes P_p von dem vertikalen Relativabstand d_ver abhängt.

Die Verstellung des Polpunktes P_p aufgrund eines geänderten vertikalen Relativabstandes d_ver ist in Fig. 9A und Fig. 9B anhand einer Tragstruktur 112 des Traktors 16 erkennbar. Bei einem großen, insbesondere maximalem Relativabstand d_ver liegt der Polpunkt P_p nahe der Hinterachse 56, während bei kleinem, insbesondere minimalem Relativabstand d_ver der Polpunkt P_p entlang der Längsrichtung 48 um eine Strecke 114 in Richtung der Vorderachse 58 verstellt worden ist. Hierdurch sind die x-Koordinate und die z-Koordinate des Polpunktes P_p verstellbar.

In der Steuereinheit 24 kann eine Soll-Vorgabe V_soll beispielsweise in Form eines Soll-Wertes d_ver_soll des Relativabstandes d_ver vorgegeben werden, um den Polpunkt P_p und somit auch die Arbeitslinie AL2 zu verstellen.

## Patentansprüche

1. Kopplungsvorrichtung (18) zur Anbindung eines Krafthebers (12) eines Traktors (16) an ein Anbaugerät (14), wobei die Kopplungsvorrichtung (18)
- einen Lenkermontagebereich (20) mit Kopplungseinheiten (68, 70) zur Anlenkung eines Oberlenkers (36) und zweier Unterlenker (32, 34) des Krafthebers (12) aufweist, und
- einen Gerätemontagebereich (22) zur Fixierung des Anbaugerätes (14) aufweist,
und wobei
- die Kopplungseinheiten (68, 70) an einer Vorrichtungsbasis (66) der Kopplungsvorrichtung (18) beweglich gelagert sind,
**dadurch gekennzeichnet, dass**
- den beiden Unterlenkern (32, 34) zugeordnete Kopplungseinheiten (68) entlang einer Querrichtung (50) mittels einer von der Kopplungsvorrichtung (18) umfassten Antriebseinheit (62) translationsbeweglich sind, und
- eine dem Oberlenker (36) zugeordnete Kopplungseinheit (70) entlang einer lotrecht zur Querrichtung (50) verlaufenden Hochrichtung (52) mittels einer von der Kopplungsvorrichtung (18) umfassten Antriebseinheit (62) translationsbeweglich ist.

2. Kopplungsvorrichtung nach Anspruch 1, **dadurch gekennzeichnet, dass** durch Ansteuerung der Antriebseinheiten (62) eine Verstellung der Lage (L_ist) eines Wirkpunktes (WP) erfolgt, welcher unter folgenden geometrischen Punkten auswählbar ist:
- ein Zugpunkt (P_z) als geometrischer Schnittpunkt gedachter Verlängerungen beider Unterlenker (32, 34),
- ein Polpunkt (P_p) als geometrischer Schnittpunkt gedachter Verlängerungen des Oberlenkers (36) und eines Unterlenkers (32, 34).

3. Kopplungsvorrichtung nach Anspruch 1 oder 2, **dadurch gekennzeichnet, dass** die den beiden Unterlenkern (32, 34) zugeordneten Kopplungseinheiten (68) zur Änderung eines entlang der Querrichtung (50) verlaufenden Relativabstandes (d_lat) zwischen ihnen beweglich sind.

4. Kopplungsvorrichtung nach einem der vorhergehenden Ansprüche, **dadurch gekennzeichnet, dass** die den Unterlenkern (32, 34) zugeordneten Kopplungseinheiten (68) unabhängig voneinander beweglich sind.

5. Kopplungsvorrichtung nach einem der vorhergehenden Ansprüche, **dadurch gekennzeichnet, dass** die dem Oberlenker (36) zugeordnete Kopplungseinheit (70) und die den Unterlenkern (32, 34) zugeordneten Kopplungseinheiten (68) unabhängig voneinander beweglich sind.

6. Kopplungsvorrichtung nach Anspruch nach einem der vorhergehenden Ansprüche, **dadurch gekennzeichnet, dass** die den beiden Unterlenkern (32, 34) zugeordneten Kopplungseinheiten (68) mit derselben Antriebseinheit (32) verbunden sind.

7. Steueranordnung (10) mit einer Kopplungsvorrichtung (18) nach einem der vorhergehenden Ansprüche zur Bewegungssteuerung eines Krafthebers (12) eines Traktors (16).

8. Steueranordnung nach Anspruch 7, **dadurch gekennzeichnet, dass** sie eine Steuereinheit (24) aufweist, welche Verstellsignale (S_v) generiert zur Einstellung
- eines Soll-Abstandes (d_ver_soll) zwischen einem Oberlenker (36) und einem Unterlenker (32, 34) des Krafthebers (12), und/oder
- eines Soll-Abstandes (d_lat_soll) zwischen zwei Unterlenkern (32, 34) des Krafthebers (12).

9. Steueranordnung nach Anspruch 8, **dadurch gekennzeichnet, dass** mittels der Verstellsignale (S_v) mindestens eine Antriebseinheit (62) der Kopplungsvorrichtung (18) zur Bewegungssteuerung des Krafthebers (12) ansteuerbar ist.

10. Steueranordnung nach Anspruch 8 oder 9, **dadurch gekennzeichnet, dass** die Steuereinheit (24) Verstellsignale (S_v) in Abhängigkeit von einer Soll-Vorgabe (V_soll) generiert.

11. Steueranordnung nach einem der Ansprüche 8 bis 10,
**dadurch gekennzeichnet, dass** die Steuereinheit (24) Sensorsignale (S_sen) von einer Sensorik (64, 64', 64'') empfängt und Verstellsignale (S_v) in Abhängigkeit von empfangenen Sensorsignalen (S_sen) generiert.

12. Steueranordnung nach Anspruch 11, **dadurch gekennzeichnet, dass** die Sensorik (64) zumindest teilweise an der Kopplungsvorrichtung (18) angeordnet ist.

## Claims

1. Coupling device (18) for attaching a power lift (12) of a tractor (16) to an attachment (14), wherein the coupling device (18) comprises
- a link mounting region (20) having coupling units (68, 70) for the articulation of an upper link (36) and two lower links (32, 34) of the power lift (12), and
- an apparatus mounting region (22) for fixing the attachment (14),
and wherein
- the coupling units (68, 70) are movably borne on a device base (66) of the coupling device (18),
**characterized in that**
- the coupling units (68) assigned to the two lower links (32, 34) are movable in a translatory manner in a transverse direction (50) by means of a drive unit (62) comprised by the coupling device (18), and
- a coupling unit (70) assigned to the upper link (36) is movable in a translatory manner in a vertical direction (52) running perpendicular to the transverse direction (50) by means of a drive unit (62) comprised by the coupling device (18).

2. Coupling device according to Claim 1, **characterized in that** activation of the drive units (62) adjusts the position (L_ist) of a point of action (WP) which may be selected from the following geometric points:
- a point of traction (P_z) as a geometric point of intersection of the imaginary extensions of both lower links (32, 34),
- a pole point (P_p) as a geometric point of intersection of the imaginary extensions of the upper link (36) and a lower link (32, 34).

3. Coupling device according to Claim 1 or 2, **characterized in that** the coupling units (68) assigned to the two lower links (32, 34) are movable relative to one another in order to alter a relative spacing (d_lat) running in the transverse direction (50).

4. Coupling device according to one of the preceding claims, **characterized in that** the coupling units (68) assigned to the lower links (32, 34) are movable independently of one another.

5. Coupling device according to one of the preceding claims, **characterized in that** the coupling unit (70) assigned to the upper link (36) and the coupling units (68) assigned to the lower links (32, 34) are movable independently of one another.

6. Coupling device according to one of the preceding claims, **characterized in that** the coupling units (68) assigned to the two lower links (32, 34) are connected to the same drive unit (32).

7. Control arrangement (10) having a coupling device (18) according to one of the preceding claims for controlling the movement of a power lift (12) of a tractor (16) .

8. Control arrangement according to Claim 7, **characterized in that** it has a control unit (24) which generates adjustment signals (S_v) for setting
- a target spacing (d_ver_soll) between an upper link (36) and a lower link (32, 34) of the power lift (12), and/or
- a target spacing (d_lat_soll) between two lower links (32, 34) of the power lift (12).

9. Control arrangement according to Claim 8, **characterized in that** at least one drive unit (62) of the coupling device (18) is able to be activated by means of the adjustment signals (S_v) for controlling the movement of the power lift (12).

10. Control arrangement according to Claim 8 or 9, **characterized in that** the control unit (24) generates adjustment signals (S_v) as a function of a target predetermined value (V_soll).

11. Control arrangement according to one of Claims 8 to 10, **characterized in that** the control unit (24) receives sensor signals (S_sen) from a sensor unit (64, 64', 64") and generates adjustment signals (S_v) as a function of received sensor signals (S_sen).

12. Control arrangement according to Claim 11, **characterized in that** the sensor unit (64) is arranged at least partially on the coupling device (18).

## Revendications

1. Dispositif d'accouplement (18) permettant de relier un relevage (12) d'un tracteur (16) à un outil porté (14), dans lequel le dispositif d'accouplement (18) présente
- une zone de montage de bras de relevage (20) pourvue d'unités d'accouplement (68, 70) pour articuler un bras supérieur (36) et deux bras inférieurs (32, 34) du relevage (12), et
- une zone de montage d'outil (22) pour fixer l'outil porté (14),
et dans lequel
- les unités d'accouplement (68, 70) sont montées mobiles sur une base de dispositif (66) du dispositif d'accouplement (18),
**caractérisé en ce que**
- des unités d'accouplement (68) associées aux deux bras inférieurs (32, 34) sont mobiles en translation le long d'une direction transversale (50) au moyen d'une unité d'entraînement (62) comprise dans le dispositif d'accouplement (18), et
- une unité d'accouplement (70) associée au bras supérieur (36) est mobile en translation le long d'une direction verticale (52) s'étendant perpendiculairement à la direction transversale (50) au moyen d'une unité d'entraînement (62) comprise dans le dispositif d'accouplement (18).

2. Dispositif d'accouplement selon la revendication 1, **caractérisé en ce que** le pilotage des unités d'entraînement (62) permet d'effectuer un réglage de la position (L_ist) d'un point d'action (WP) qui peut être sélectionné parmi les points géométriques suivants :
- un point de traction (P_z) comme point d'intersection géométrique de prolongements imaginaires des deux bras inférieurs (32, 34),
- un point polaire (P_p) comme point d'intersection géométrique de prolongements imaginaires du bras supérieur (36) et d'un bras inférieur (32, 34).

3. Dispositif d'accouplement selon la revendication 1 ou 2, **caractérisé en ce que** les unités d'accouplement (68) associées aux deux bras inférieurs (32, 34) sont mobiles pour modifier une distance relative (d_lat) entre celles-ci s'étendant le long de la direction transversale (50) .

4. Dispositif d'accouplement selon l'une quelconque des revendications précédentes, **caractérisé en ce que** les unités d'accouplement (68) associées aux bras inférieurs (32, 34) sont mobiles indépendamment l'une de l'autre.

5. Dispositif d'accouplement selon l'une quelconque des revendications précédentes, **caractérisé en ce que** l'unité d'accouplement (70) associée au bras supérieur (36) et les unités d'accouplement (68) associées aux bras inférieurs (32, 34) sont mobiles indépendamment les unes des autres.

6. Dispositif d'accouplement selon l'une quelconque des revendications précédentes, **caractérisé en ce que** les unités d'accouplement (68) associées aux deux bras inférieurs (32, 34) sont reliées à la même unité d'entraînement (32).

7. Agencement de commande (10) comprenant un dispositif d'accouplement (18) selon l'une quelconque des revendications précédentes pour la commande de mouvement d'un relevage (12) d'un tracteur (16).

8. Agencement de commande selon la revendication 7, **caractérisé en ce qu'**il présente une unité de commande (24) qui génère des signaux de réglage (S_v) pour régler
- une distance de consigne (d_ver_soll) entre un bras supérieur (36) et un bras inférieur (32, 34) du relevage (12), et/ou
- une distance de consigne (d_lat_soll) entre deux bras inférieurs (32, 34) du relevage (12).

9. Agencement de commande selon la revendication 8, **caractérisé en ce que** les signaux de réglage (S_v) permettent de piloter au moins une unité d'entraînement (62) du dispositif d'accouplement (18) pour la commande de mouvement du relevage (12).

10. Agencement de commande selon la revendication 8 ou 9, **caractérisé en ce que** l'unité de commande (24) génère des signaux de réglage (S_v) en fonction d'une spécification de consigne (V_soll).

11. Agencement de commande selon l'une quelconque des revendications 8 à 10, **caractérisé en ce que** l'unité de commande (24) reçoit des signaux de capteur (S_sen) d'un système de capteurs (64, 64', 64") et génère des signaux de réglage (S_v) en fonction des signaux de capteur (S_sen) reçus.

12. Agencement de commande selon la revendication 11, **caractérisé en ce que** le système de capteurs (64) est disposé au moins partiellement sur le dispositif d'accouplement (18).
